# DEMANDE DE BREVET EUROPEEN

(11) **EP 0 887 486 A1**
(43) Date de publication de la demande: **30.12.1998**
(21) Numéro de dépôt: 98401511.5
(22) Date de dépôt: 19.06.1998
(51) Int. Cl.: E04C 5/01

(54) **Composition de béton renforcée par des rubans métalliques, son procédé de préparation et pièces obtenues à partir de cette composition**

(30) Priorité: 27.06.1997 FR 9708160
(71) Demandeur: SEVA, F-71100 Chalons-sur-Saône (FR)
(72) Inventeur: Pfeiffer, Gilbert, 54700 Pont à Mousson (FR); Tacconi, Michel, 54700 Pont à Mousson (FR); Aubry, Joel, 54470 Thiaucourt (FR)
(74) Mandataire: Le Guen, Gérard

(57) **Abrégé**

La présente invention a pour objet une composition de béton renforcée par des fibres métalliques de structure amorphe comprenant en outre au moins du ciment, des éléments granulaires, des éléments ultrafins, de l'eau et un agent dispersant caractérisée en ce qu'elle comprend à titre de fibres métalliques, au moins 4 à 40 % en masse de rubans métalliques.

Elle se rapporte également à un procédé de préparation de ladite composition et aux pièces de béton obtenues par durcissement de cette composition.

## Description

La présente invention a pour objet une composition de béton renforcée par des fibres métalliques en forme de rubans et dotée de performances améliorées en termes de durabilité et de comportement mécanique, notamment en termes de résistance en compression et en flexion ainsi que de ductilité, et aux pièces obtenues à partir de ces bétons.

Les bétons traditionnels sont obtenus de manière générale à partir des composants suivants : du ciment, des éléments granulaires ou granulats comprenant des sables (de taille inférieure à 5 mm) et éventuellement des graviers de taille comprise entre 5 mm et 30 mm, et de l'eau. Depuis plusieurs années, de nouvelles compositions de béton composites ont été développées dans le souci d'améliorer leurs performances, principalement en termes de résistance mécanique et de ductilité.

L'amélioration la plus significative a notamment été réalisée en diminuant de manière conséquente leur rapport eau/ciment et en leur incorporant des éléments fins à réactions pouzzolaniques, ainsi que des charges métalliques.

Cette forte réduction d'eau est principalement obtenue grâce à l'introduction dans la composition de béton, d'un agent dit superplastifiant. Ce superplastifiant est en fait un puissant agent dispersant des éléments fins du béton qui permet de réaliser des bétons d'une consistance donnée, avec un minimum d'eau de gâchage et dotés d'une résistance à la compression de l'ordre de 150 MPa.

Quant aux charges métalliques en général, leur emploi permet de modifier les propriétés des bétons et notamment d'augmenter, suivant la nature des particules constituant la charge, leur résistance en compression, en flexion et/ou leur capacité de résistance après fissuration. Ces charges métalliques peuvent notamment être composées de fibres métalliques de différentes dimensions et mélangées dans des proportions variables.

Toutefois, bien que performantes en terme de résistance mécanique, notamment de résistance en compression qui atteint environ 200 MPa, les compositions de béton actuellement disponibles ne sont pas totalement satisfaisantes en terme de durabilité dans une large gamme de conditions d'exposition.

Or le souci de la pérennité des ouvrages nécessite l'utilisation de matériaux performants dont on cherche à assurer la durabilité et/ou la non corrodabilité au cours du temps. Les conteneurs, destinés au conditionnement et au stockage de déchets radioactifs, en sont un exemple particulier. Dans ce cas spécifique, il est indispensable de pouvoir garantir une durabilité du béton, sur une période d'au moins 300 ans.

En conséquence, il existe aujourd'hui une demande de nouveaux bétons composites possédant, outre une résistance mécanique importante, une résistance à la corrosion suffisamment performante pour en garantir le maintien des propriétés et de l'aspect.

Pour donner satisfaction conjointement à ces deux exigences, une première approche consisterait à incorporer dans ces bétons, une quantité importante d'une charge métallique, à caractère non oxydable. L'inoxydabilité de celle-ci serait une garantie de pérennité dans le temps et sa concentration élevée dans le béton, l'assurance d'une résistance mécanique performante.

Toutefois, il est reconnu que l'introduction des fibres métalliques couramment disponibles sur le marché, à une concentration supérieure à environ 3 % en masse, soulève des difficultés. Ces difficultés surviennent lors de l'opération de malaxage des composants ou encore lors de la mise en place de la composition dans les moules, opérations qui s'avèrent impossibles à réaliser dans des conditions satisfaisantes ou qui conduisent à des défauts dans les pièces réalisées.

La présente invention a précisément pour objet de proposer une nouvelle composition de béton répondant aux exigences précédemment évoquées et dont la préparation ne soulève pas les difficultés escomptées.

Plus précisément, la présente invention a pour objet une composition de béton renforcée par des fibres métalliques de structure amorphe comprenant en outre au moins du ciment, des éléments granulaires, des éléments ultrafins, de l'eau et un agent dispersant caractérisée en ce qu'elle comprend à titre de fibres métalliques, au moins 4 à 40 % en masse de rubans métalliques composés d'un alliage métallique à base de fer, de phosphore, de carbone, de silicium et de chrome.

De manière inattendue, la demanderesse a ainsi mis en évidence qu'il était possible de préparer des compositions de béton à forte concentration en fibres métalliques à partir d'un choix de fibres métalliques bien spécifiques.

Selon la présente invention, ces fibres sont en fait des rubans métalliques à structure amorphe, et dont les longueurs sont comprises entre environ 1 et 45 mm, les largeurs entre environ 0,1 et 2 mm et les épaisseurs entre environ 15 et 30 µm.

Ces rubans métalliques, mis en oeuvre dans le cas de la présente invention, ont pour premier avantage d'être élaborés à partir d'un alliage métallique amorphe. Ils sont ainsi composés d'un alliage métallique à base de fer, de phosphore, de carbone, de silicium et de chrome. Obtenus par trempe d'un métal liquide sur une roue en rotation à grande vitesse, ces rubans métalliques subissent un refroidissement violent, de l'ordre de 1 million de degrés par seconde, qui a pour intérêt de figer le métal dans un état amorphe c'est-à-dire non cristallin. Ces rubans métalliques sont notamment élaborés selon le procédé de préparation plus particulièrement décrit dans la demande de brevet FR 2 500 851 déposée le 27 février 1981. Pour plus de détails, on pourra se référer à la description de cette demande.

La composition intrinsèque de ces rubans métalliques, résultant d'un alliage fer-chrome, et leur structure amorphe garantissent donc avantageusement une inoxydabilité dans le temps même au sein des environnements les plus agressifs comme par exemple des milieux salins (chlorure, sulfate) et acides. Cette inoxydabilité est donc une garantie de pérennité dans le temps pour la composition de béton les incorporant.

Plus préférentiellement, les rubans métalliques, mis en oeuvre dans le cadre de la présente invention sont composés d'un mélange amorphe (Fe, Cr)₈₀ (P, C, Si)₂₀.

A titre de rubans métalliques, préférentiellement mis en oeuvre dans le cadre de la présente invention, on citera tout particulièrement les rubans métalliques dénommées Fibraflex® et commercialisés par la société Seva.

Le second avantage de ces rubans métalliques est directement lié à leur forme. De par leur forme particulière, ces rubans présentent une grande souplesse, qui apparaît propice à leur incorporation à des concentrations nettement supérieures à celles habituellement préconisées.

Par ailleurs, il est tout à fait possible de mettre en oeuvre dans le cas de la présente invention, des mélanges de rubans métalliques de différentes largeur, longueur et/ou épaisseur dans la mesure où toutefois celles-ci répondent aux caractéristiques revendiquées.

Bien entendu, la concentration maximale pouvant être incorporée est liée aux dimensions, et, dans le cas d'un mélange de rubans différents, à la distribution des dimensions.

A titre d'exemple, on peut réaliser une composition selon l'invention contenant une concentration d'environ 18 % en masse de rubans de dimensions 5 mm x 1 mm x 24 µm ce qui n'est pas réalisable par malaxage avec des rubans de longueur 30 mm.

Selon un mode de réalisation particulier de l'invention, ces rubans métalliques incorporés ont une longueur de 10 à 30 mm, une largeur de 1 à 1,6 mm et une épaisseur de 25 à 30 µm et plus préférentiellement une longueur de l'ordre de 15 à 20 mm, une largeur de l'ordre du millimètre et une épaisseur de l'ordre de 26 µm. Dans ces cas, on peut réaliser des compositions pouvant contenir jusqu'à 8,5 % en masse de tels rubans.

En revanche, lorsque l'on juge avantageux d'incorporer de très fortes concentrations en fibres, on privilégie des rubans de petites longueur et largeur, et en particulier un mélange de rubans dont la longueur est comprise entre environ 1 et 20 mm, la largeur comprise entre environ 0,1 et 0,5 mm et l'épaisseur comprise entre environ 15 et 30 µm. A titre d'exemple, on peut réaliser une composition selon l'invention contenant une concentration d'environ 35 % en masse de tels rubans.

De manière inattendue, pour des rubans de même longueur, à savoir par exemple 20 mm, mais de largeurs différentes, on observe des qualités mécaniques du béton correspondant, supérieures avec celles possédant la plus petite largeur. En conséquence, pour une concentration déterminée, on privilégiera l'emploi de rubans métalliques étroits.

Les rubans métalliques selon l'invention possèdent par ailleurs une surface spécifique comprise entre environ 9 et 19 m²/kg, et de préférence comprise entre 9 et 11 m²/kg.

Bien entendu, cette surface spécifique est fonction des dimensions des rubans métalliques sélectionnés (largeur, épaisseur, longueur).

Par ruban on entend ici une forme sensiblement parallélépipédique, ayant une longueur nettement supérieure à la largeur, elle-même nettement supérieure à l'épaisseur (les rapports longueur/largeur et largeur/épaisseur étant en général supérieurs à 3).

Selon un mode privilégié de l'invention le rapport largeur/épaisseur des rubans métalliques est compris entre 30 et 70.

Outre les charges métalliques décrites ci-dessus, les compositions de bétons revendiquées comprennent pour l'essentiel du ciment, des éléments granulaires, des éléments ultrafins, un agent dispersant, éventuellement d'autres adjuvants, et de l'eau.

Le ciment est un ciment Portand de type CPA PMES, HP, HPR ou HTS (à haute teneur en silice), ou éventuellement de type CLC (ciment au laitier et aux cendres).

Le ciment est de préférence présent dans la composition à raison de 30 à 60 % massique.

Les éléments granulaires sont des sables naturels ou artificiels de granulométrie inférieure à 3 mm. Pour limiter la teneur en eau et/ou en pâte liante de la composition, on préfère éviter les sables broyés.

On a utilisé plus particulièrement un sable naturel siliceux contenant de préférence environ 95 % de silice, et ayant de préférence une granulométrie de 100-400 µm. Le sable est de manière générale présent dans les compositions revendiquées de manière à compléter la composition, et en particulier de 15 à 50 % en masse.

Les éléments ultrafins sont des particules de taille inférieure à 1 µm, intervenant pour au moins l'une des raisons suivantes :
- remplissage des vides intergranulaires laissés par les particules ou éléments granulaires de taille supérieure. Il est ainsi possible d'augmenter la compacité du squelette solide;
- existence de réactions hydrauliques ou pouzzolaniques;
- effet de germe et d'homogénéisation des réactions ; on évite la formation par exemple de gros cristaux de chaux qui constitueraient des défauts vis-à-vis des performances recherchées.

Les éléments ultrafins peuvent être en particulier, soit des éléments à réactions pouzzolaniques tels que la silice amorphe de fumées de silice, les quartz ultrabroyés, les métakaolins, les cendres volantes soit des éléments à réactions hydrauliques tels que les laitiers hyperbroyés.

Ces éléments ultrafins sont de préférence présents dans la composition à raison de 5 à 15 % en masse.

Dans le cas de l'utilisation de fumée de silice, mise en oeuvre dans une composition selon l'invention, cette fumée de silice est de manière générale issue de l'industrie du silicium ou du zirconium.

Elle est présente dans la composition à raison de 5 à 15 % massique.

L'eau y est présente à raison de 6 à 12 % massique.

Quant à l'agent dispersant, il s'agit en fait d'un superplastifiant du groupe constitué par la naphtalène, la mélamine, le polyacrylate ou autre superplastifiant du béton. Selon un mode préféré de la présente invention, il s'agit d'un polymère de la famille des polymélamines et plus particulièrement du Chrysosuperplast thp® commercialisé par la société Chryso. On utilise de préférence au moins 0,5 à 3 % massique de ce composé dans la composition revendiquée.

De manière préférée, les compositions possèdent un rapport eau/ciment variant entre environ 0,18 et 0,25.

On choisit de manière générale les ingrédients hors fibres précédemment décrits et leurs proportions, pour permettre d'obtenir des bétons de compacité et résistances maximales, éventuellement après mûrissement, étuvage et/ou traitement thermique adéquats.

Il est connu qu'il est ainsi possible d'obtenir des matériaux sans fibres présentant une résistance en compression voisine de 200 MPa et plus généralement comprise entre 150 et 350 MPa.

A partir d'une composition conduisant à un tel matériau, on obtient en y intégrant des rubans métalliques dans les proportions suivant l'invention, une composition dérivée qui présente après traitement suivant un procédé sensiblement identique à celui du béton sans fibres, une résistance en compression voisine de celle du béton sans fibres et un comportement en flexion amélioré et ceci de manière durable dans le temps.

L'amélioration du comportement en flexion consiste en une augmentation de la résistance après fissuration ; la capacité de résistance après fissuration est liée à la présence des rubans dans la composition, un béton sans fibres présentant un comportement fragile.

A titre de composition de béton préférée selon la présente invention, on peut plus particulièrement mentionner celle comprenant en % massique :

| | |
|---|---|
| éléments granulaires | complément à 100 % |
| éléments ultrafins | 5 à 15 % |
| ciment | 30 à 60 % |
| agent dispersant (extrait sec) | 0,5 à 3 % |
| rubans métalliques | 4 à 40 % |
| eau | 6 à 12 %. |

Plus préférentiellement il s'agit d'une composition de béton comprenant en % massique :

| | |
|---|---|
| sable siliceux | 28,6 % |
| fumée de silice | 12,7 % |
| ciment Portland | 41,2 % |
| agent dispersant à base de polymélamine | 1,0 % |
| rubans métalliques (longueur de 5 à 15 mm, largeur de l'ordre de 1 mm et épaisseur entre 15 et 26 µm) | 8,5 % |
| eau | 8,0 %. |

La présente invention concerne également un procédé de préparation de la composition revendiquée.

Plus précisément, elle vise un procédé de préparation caractérisé en ce que :
- dans une première étape, on mélange dans un malaxeur les éléments granulaires, le ciment, les éléments ultrafins, tout ou partie de la quantité requise en agent dispersant et tout ou partie de l'eau, jusqu'à l'obtention d'un mélange homogène,
- dans une seconde étape éventuelle, on ajoute tout ou partie de la quantité restante en agent dispersant et en eau et on mélange l'ensemble de manière à obtenir un mélange homogène et de consistance pâteuse ou fluide,
- dans une troisième étape, on ajoute progressivement audit mélange, de préférence maintenu sous agitation, la charge métallique considérée et les quantités restantes éventuelles en agent dispersant et eau et l'on poursuit l'agitation, de préférence à forte vitesse, jusqu'à l'obtention d'un mélange homogène et l'on récupère la composition.

A titre d'exemple on peut réaliser une composition selon l'invention en employant le procédé de préparation suivant :
- dans une première étape, on mélange sous agitation à faible vitesse les éléments granulaires, le ciment, les éléments ultrafins, environ 1/3 de la quantité requise en agent dispersant, et la totalité de l'eau, jusqu'à obtenir un mélange homogène,
- dans une seconde étape, on ajoute tout ou partie de l'agent dispersant et on mélange l'ensemble jusqu'à obtenir un mélange homogène de consistance pâteuse ou fluide,
- dans une dernière étape on ajoute progressivement audit mélange la charge métallique considérée et le restant éventuel de l'agent dispersant, et l'on poursuit l'agitation à forte vitesse jusqu'à l'homogénéisation.

Chacune des opérations de mélange est en fait effectuée par malaxage à petite ou grande vitesse, l'amplitude de la grande vitesse étant environ le double de celle de la petite vitesse.

Selon un mode particulier, le procédé met en oeuvre un malaxeur de type Rayneri® à mouvement planétaire, équipé d'un variateur de vitesse électronique. Il a pour avantage de permettre la variation de la vitesse suivant une rampe jusqu'à l'obtention d'une valeur sensiblement constante. La petite vitesse ou grande vitesse, mentionnées précédemment, correspondent en fait à ce palier de vitesse constante.

Plus précisément, la petite vitesse utilisée correspond à une rotation orbitale d'environ 30 trs/mn et une rotation propre de la pale d'environ 100 trs/mn et comme mentionné précédemment la grande vitesse est approximativement le double de la petite vitesse.

Chaque opération de malaxage est en fait conduite de manière à obtenir une pâte homogène, et en une étape finale, un enrobage satisfaisant des rubans métalliques.

Selon une variante du procédé, cette homogénéisation est avantageusement facilitée en incorporant les éléments granulaires avant le ciment et après avoir effectué un prémélange des éléments ultrafins, de l'eau et éventuellement de tout ou partie de l'agent dispersant. Cette opération évite ou limite la formation d'amas restant collés sur les pales ou la cuve du malaxeur.

A l'issue du procédé, la composition est mise en place dans un moule où le béton fait sa prise. La cure du béton est menée à température ambiante ou de façon classique par étuvage. A l'issue de cette première cure, les pièces sont démoulées et subissent ou non un deuxième traitement consistant à maintenir les pièces dans une étuve comprise entre 90°C et 250°C, pour une durée comprise entre 24 et 72 h.

Les compositions de béton selon l'invention s'avèrent particulièrement avantageuses de part leur grande résistance mécanique et leur inoxydabilité. En raison de leur grande durabilité, elles peuvent être utilisées dans la construction de conteneurs destinés plus particulièrement au conditionnement et/ou au stockage des déchets radioactifs ou chimiques. Le caractère inoxydable de leur charge métallique évite d'en faire une cause de dégradation dans le temps des matériaux les incorporant. Ce caractère inoxydable des charges métalliques présente également un intérêt sur le plan esthétique. Aucune coulée de rouille ne peut se manifester à la surface du matériau fini.

Enfin, compte tenu de sa charge métallique, la composition revendiquée confère aux matériaux qui en dérivent une efficacité mécanique optimale. Le matériau composite présente une ténacité ou ductilité caractérisée par sa capacité à supporter des charges alors même qu'il est fissuré, les rubans assurant un transfert des charges au travers des fissures.

Le matériau composite présente ainsi non seulement une résistance en flexion plus élevée qu'un matériau analogue sans fibres, mais cette résistance est nettement supérieure à la limite de proportionnalité, au delà de laquelle on sait que la matrice cimentaire est endommagée ou fissurée.

De plus la déformation au maximum de charge en flexion est aussi nettement supérieure à la déformation à la limite de proportionnalité, ce qui assure le caractère ductile renforçant du comportement en flexion.

A ce comportement est associée la possibilité d'une fissuration multiple sous sollicitations qui dépassent la limite de proportionnalité, ce qui signifie que l'endommagement associé à une déformation donnée est réparti en de nombreuses fissures peu espacées et peu ouvertes au lieu d'être concentré en une fissure unique très ouverte. Alors même que les fissures seraient peu ouvertes et que la pénétration d'agents agressifs dans ces fissures serait limitée, l'endommagement du béton sous une cause quelconque, par exemple un choc ou des variations dimensionnelles gênées, exposerait les rubans à ces agents ; le caractère incorrodable des rubans est alors un avantage pour la durabilité d'ensemble des pièces.

Pour ce qui est de la facilité de préparation et de coulage de la composition utilisant les fibres souples en ruban, les résultats présentés en exemple 2 montrent en particulier qu'il n'est pas observé de perte de résistance en compression avec une composition selon l'invention au regard d'une composition non renforcée. Il est en effet connu, en toute généralité, que la maniabilité d'une composition cimentaire fibrée décroît lorsque le dosage en fibres augmente ou lorsque, à dosage égal, la longueur des fibres augmente ou encore que l'élancement géométrique augmente ; cette diminution de maniabilité s'accompagne d'une diminution de la compacité du mélange, qui se traduit par une perte de résistance en compression de la composition durcie. Dans le cas des compositions revendiquées, le mélange frais reste aisé à placer dans les moules même en employant des rubans de longueur de 15 mm voire supérieure.

La présente invention se rapporte également aux éléments en béton obtenus par durcissement d'une composition définie selon la présente invention.

Les compositions de bétons revendiquées s'avèrent ainsi particulièrement adaptées à l'obtention de constructions telles que : des panneaux de façade, vêtures, bardages de bâtiment, des éléments de construction aptes à présenter une résistance aux chocs, des dallettes ou dalles de plancher, poutrelles, éléments de coffrage permanent, des cunettes, caniveaux préfabriqués, réservoirs, conteneurs, des canalisations et des plaques ou coques minces, c'est-à-dire des éléments plans ou avec courbures dont l'épaisseur est faible comparativement à l'épaisseur d'éléments qui seraient obtenus avec des matériaux cimentaires classiques (tels que béton armé). On peut ainsi envisager des pièces dont l'épaisseur peut être voisine du centimètre.

L'ensemble de ces éléments de construction manifestent avantageusement une résistance mécanique et un comportement ductile multifissurant optimisés, une résistance aux chocs améliorée et une excellente pérennité dans le temps. Enfin, on peut en outre envisager le remplacement possible de conceptions de pièces contenant des armatures métalliques devant être protégées de la corrosion par une surépaisseur de béton ; les rubans amorphes ne nécessitent pas une telle protection.

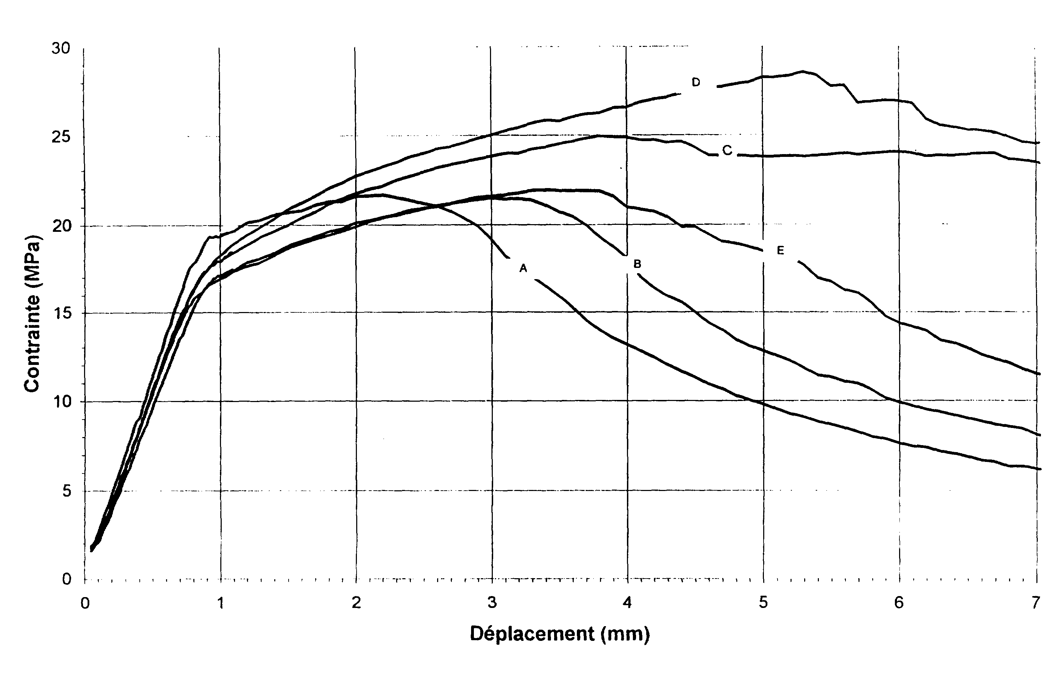

L'invention sera encore illustrée ci-après par la figure 1 et les exemples présentés ci-après à titre non limitatif de celle-ci.

### FIGURE.

Figure 1 : Courbes moyennes de comportement de compositions selon l'invention en fonction de l'évolution de la force moyenne appliquée par rapport au déplacement.

### MATERIELS ET METHODES.

### 1. Matériels

- Le ciment est un ciment Portland CPA HTS commercialisé par LAFARGE.
- La fumée de silice est une fumée de silice de l'usine d'Anglefort commercialisée par CONDENSIL, ou une fumée de silice produite par SEPR.
- L'agent dispersant est le Chrysosuperplast THP® commercialisé par la société Chryso. Il s'agit d'un polymère de la famille des polymélamines.
- Les rubans métalliques sont les rubans FIBRAFLEX® commercialisés par Seva. Ils sont composés d'un alliage métallique (Fe, Cr)₈₀ (P, C, Si)₂₀.

### 2. Méthodes

### Essais de flexion et de compression sur éprouvettes prismatiques 4 x 4 x 16 cm

Les essais mécaniques de flexion et de compression sur éprouvettes prismatiques 4 x 4 x 16 cm sont réalisés suivant les prescriptions de la norme européenne NF EN 196-1 "Méthodes d'essais des ciments Partie 1 : détermination des résistances mécaniques".

### Essai de flexion avec enregistrement force-flèche

Les essais sont réalisés sur des éprouvettes de dimensions nominales 350 mm x 80 mm x 10 mm à l'aide d'un montage de flexion 4 points, d'une portée de 300 mm et permettant d'imposer un moment maximal constant sur une zone centrale de longueur 100 mm. Les essais sont menés sur une presse à vis, avec une vitesse constante de déplacement de traverse égale à 2 mm/min.

Le comportement force-flèche de l'éprouvette est établi d'après l'enregistrement numérique de l'évolution de la force au cours de l'essai.

### EXEMPLE 1

### Préparation d'une composition de béton, renforcée ou non en rubans métalliques et détermination de leurs résistances mécaniques.

On prépare quatre compositions de béton, une composition dite témoin sans ruban métallique et trois compositions selon l'invention dite renforcées.

Les rubans métalliques incorporés dans cette composition sont des rubans FIBRAFLEX® dont les spécificités sont indiquées dans le tableau I ci-après.

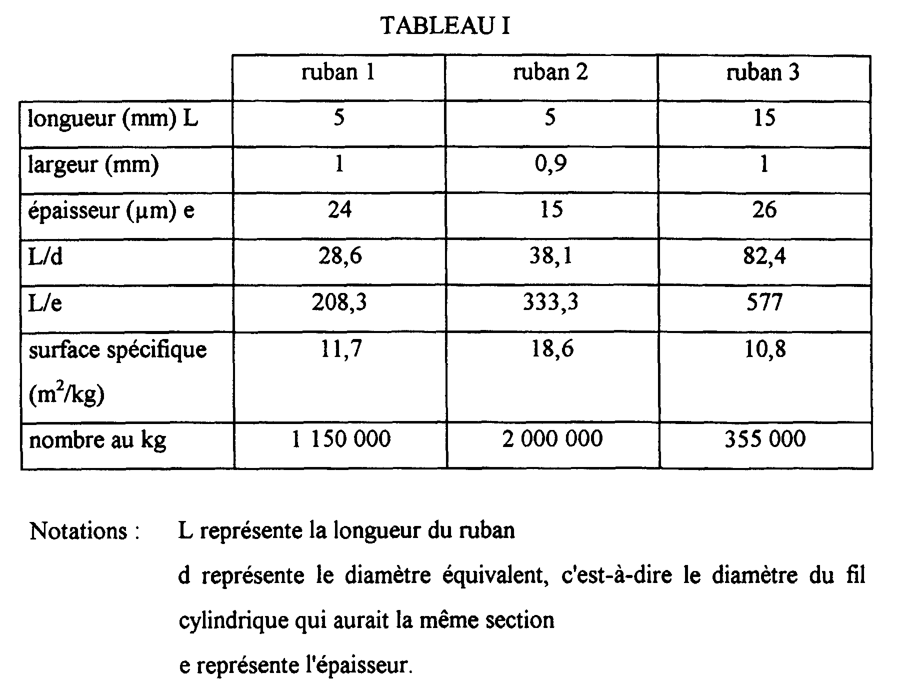

Le tableau II ci-après rend compte de leurs compositions respectives.

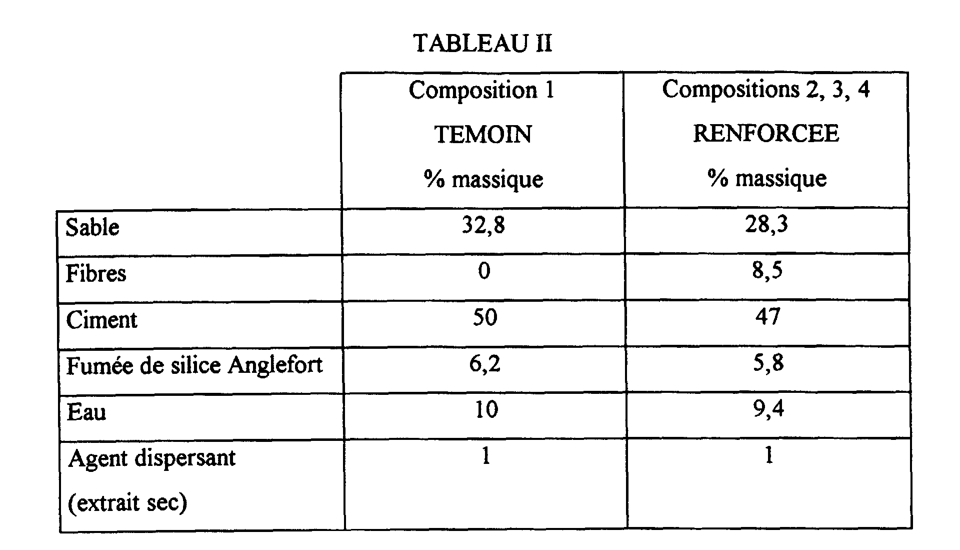

Les mélanges des différents composants sont réalisés dans un malaxeur RAYNERI à mouvement planétaire, équipé d'un variateur de vitesse électronique. La vitesse varie suivant une rampe jusqu'à atteindre une valeur sensiblement constante. La petite vitesse ou grande vitesse mentionnées ici correspondent à ce palier de vitesse constante. La petite vitesse utilisée correspond à une rotation orbitale d'environ 30 tours/min et une rotation propre de la pale d'environ 100 tours/min. La grande vitesse est approximativement le double de la petite vitesse.

Plus précisément, on introduit l'ensemble des matières sèches à l'exception des rubans métalliques et on mélange pendant 3 minutes à petite vitesse. On ajoute 1/3 environ de l'agent dispersant et la totalité de l'eau de gâchage, le mélange est poursuivi pendant 3 minutes à petite vitesse.

Les 2/3 restants de l'agent dispersant sont ensuite introduits et l'on mélange pendant 3 minutes à petite vitesse, puis 3 minutes à grande vitesse. On ajoute alors le cas échéant, les rubans métalliques progressivement dans le mélange malaxé sous grande vitesse, sans arrêter ce malaxage qui est poursuivi jusqu'à obtention d'une pâte homogène.

### Fabrication des éprouvettes

Le mélange obtenu est coulé dans des moules normalisés pour prismes de dimensions 4 x 4 x 16 cm. Les moules sont vibrés sur table vibrante pendant 1 mn 30 s environ, puis recouverts d'une plaque évitant la dessiccation, jusqu'au démoulage le lendemain. Les prismes 4 x 4 x 16 cm sont alors enfermés dans une protection plastique et laissés en halle de travail jusqu'à l'échéance des essais mécaniques.

### Résistances mécaniques des compositions durcies

Chacune des éprouvettes, correspondant soit à la composition témoin ou aux compositions incorporant des rubans métalliques tels qu'identifiés en tableau I, sont testées pour leurs résistances en compression et en flexion, 28 jours après leur préparation.

Le tableau III rend compte des résultats obtenus.

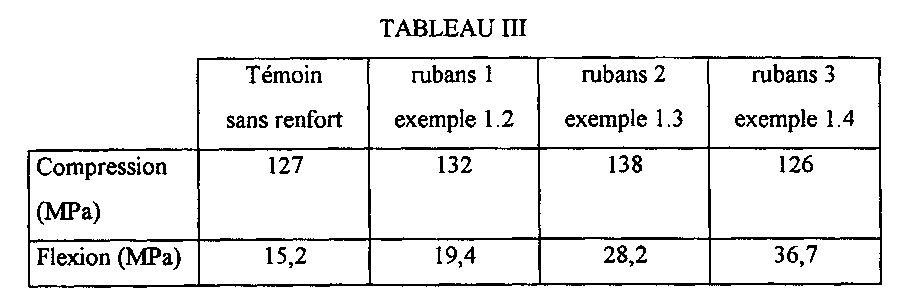

Sur cet exemple on constate que les rubans amorphes de 5 mm de long (exemples 1.2 et 1.3), apportent un notable renforcement en flexion par rapport au mortier sans fibres.

Ce renforcement en flexion est plus marqué dans la configuration du 1.3 (résistance augmentée de 45 %) où la surface spécifique des fibres est plus élevée ainsi que le nombre de fibres par unité de masse.

En comparant par ailleurs les exemples 1.2 et 1.4, on constate que pour les rubans de 5 mm et 15 mm qui présentent entre eux des surfaces spécifiques voisines, les rubans métalliques plus longs conduisent à une résistance en flexion plus élevée.

La résistance en flexion obtenue grâce à l'incorporation de 8,5 % en masse environ de rubans métalliques de 15 mm est supérieure au double de la résistance en flexion du mortier de référence sans rubans (coefficient 2.4).

De la comparaison des résistances en compression, on constate que les différences deux à deux sont inférieures à 10 %. En particulier, la résistance en compression de la composition avec les rubans plus longs (exemple 1.4) n'est guère différente de la résistance en compression du matériau composé sans rubans métalliques. Ceci indique indirectement que l'incorporation de rubans, et particulièrement des rubans longs (15 mm) n'a pas provoqué de dégradation du matériau composé cimentaire comme on pouvait le craindre a priori ; il est en effet connu, en toute généralité, que la maniabilité d'une composition cimentaire fibrée décroît lorsque le dosage en fibres augmente ou lorsque, à dosage égal, la longueur des fibres augmente ou encore que l'élancement géométrique augmente ; cette diminution de maniabilité s'accompagne d'une diminution de la compacité du mélange, qui se traduit par une perte de résistance en compression de la composition durcie. Dans le cas des compositions revendiquées avec rubans métalliques, le mélange frais reste aisé à placer dans les moules même en employant les fibres de longueur 15 mm. Une difficulté de mise en place, à moyens de serrage constants (ici la vibration d'une durée fixe sur table vibrante), se serait traduite par l'introduction de défauts, cavités, porosité (par rapport à la composition de référence sans ajout de rubans) conduisant à une résistance en compression diminuée, ce qui n'a pas été observé.

### EXEMPLE 2

### Préparation d'un béton renforcé à 8,5 % en masse environ de rubans 2, soumis à un traitement thermique.

La composition testée contient en % massique

| | |
|---|---|
| Sable | 28,6 |
| Ciment | 41,2 |
| Fumée de silice blanche SEPR | 12,7 |
| Eau totale | 8 |
| Superplastifiant (extrait sec) | 1 |
| Rubans métalliques | 8,5 |

avec un rapport eau/ciment = 0,195.

Cette composition est préparée comme suit :

On mélange d'abord la fumée de silice et l'eau d'ajout et environ 1/3 du superplastifiant puis le sable ; on ajoute le ciment et une partie du superplastifiant restant en malaxant à petite vitesse pendant 1 à 2 minutes ; on ajoute ensuite les fibres et le superplastifiant restant, et on malaxe à grande vitesse jusqu'à l'homogénéisation.

3 éprouvettes 4 x 4 x 16 cm sont coulées et conservées jusqu'à démoulage à l'âge de 24 h, comme dans l'exemple 1.

Après démoulage, les éprouvettes sont disposées dans une étuve à 100°C environ, pendant 60 h, puis sorties de l'étuve et laissées à l'atmosphère ambiante. Les essais mécaniques sont réalisés comme dans l'exemple 1 après refroidissement des éprouvettes.

Les résultats sont présentés dans le tableau IV ci-après.

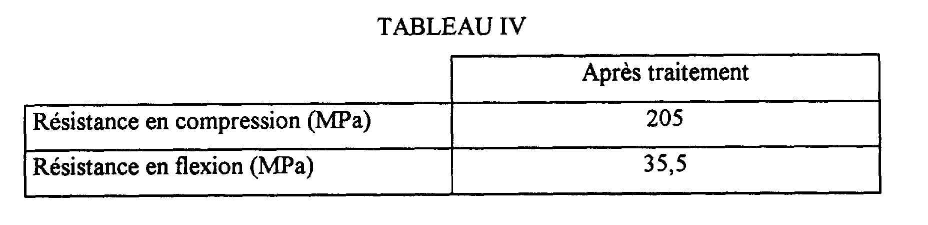

On constate dans cet exemple, où l'on utilise les mêmes rubans 2 que dans l'exemple 1.3, que les performances en compression et flexion sont nettement augmentées par rapport à l'exemple 1.3.

Ceci montre que les rubans métalliques permettent d'obtenir des résistances en flexion très élevées lorsque l'on emploie une matrice de résistance en compression très élevée. Dans le cas présent la résistance en compression a été obtenue notamment grâce à un certain traitement thermique.

Le mode d'obtention d'une matière cimentaire de résistance en compression très élevée peut différer de ce procédé ; les exemples précédents donnent l'idée que l'emploi de rubans amorphes conduit alors à des compositions de résistances en compression voisines mais possédant des résistances en flexion ou plus généralement un comportement en flexion performants.

### EXEMPLE 3

### Préparation d'un béton renforcé à environ 35 % en masse (15 % en volume) de particules en forme de rubans, et soumis à un traitement thermique.

La formulation testée a la composition suivante :

| | % massique |
|---|---|
| Sable | 13,4 |
| Ciment | 33,9 |
| Fumée de silice SEPR | 10,5 |
| Eau totale | 6,6 |
| Superplastifiant (extrait sec) | 0,8 |
| Rubans | 34,8 |

rapport eau/ciment = 0,195

Les rubans considérées ici sont des particules amorphes allongées dont les dimensions sont variables au sein d'un même lot. Il s'agit de rubans, dont la largeur peut également être variable dans une même particule ; les longueurs des particules prépondérantes sont comprises entre 1 et 20 mm, leur largeur entre 0,1 et 0,3 mm et leur épaisseur entre 15 et 30 µm.

Un mélange contenant près de 35 % en masse de ces rubans a été réalisé, suivant le protocole décrit en exemple 2, en conservant un rapport eau/ciment = 0,195 de la pâte liante.

3 prismes 4 x 4 x 16 cm sont coulés puis démoulés après durcissement à 24 h ; les prismes sont ensuite entreposés dans une étuve à 180°C pendant 48 h. A l'issue de cette période, et après refroidissement, les prismes sont testés en flexion et en compression.

Les résultats sont présentés dans le tableau V ci-après

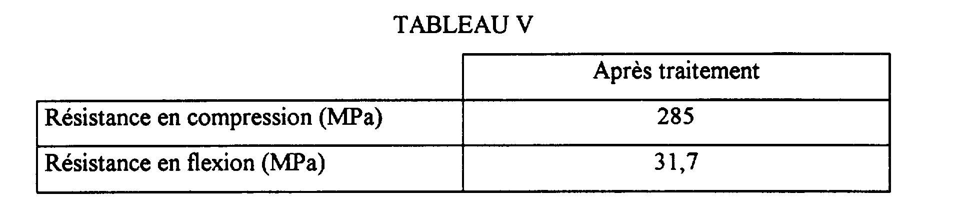

La composition durcie comportant une concentration importante de cette seconde catégorie de rubans, manifeste également des performances en compression et flexion comparables voire supérieures à celles observées avec le béton de l'exemple 2 et quoiqu'il en soit, nettement supérieures à celles du béton témoin de l'exemple 1.

### EXEMPLE 4

### Pièces minces renforcées à environ 8,5 % en masse (3 % en volume) de rubans métalliques.

On reprend la composition de l'exemple 2.

| | % massique |
|---|---|
| Sable | 28,6 |
| Ciment | 41,2 |
| Fumée de silice SEPR | 12,7 |
| Eau totale | 8 |
| Superplastifiant (extrait sec) | 1 |
| Rubans métalliques | 8,5 |

On réalise diverses compositions, dont à titre d'exemple cinq compositions A, B, C, D, E suivant l'invention, dont les constituants sont présents suivant les teneurs de la composition de l'exemple 2, et qui ne diffèrent que par les dimensions des rubans métalliques introduits.
- Composition A : rubans 2, identiques à ceux des exemples 1.3 et 2
- Composition B : rubans 4 caractérisés par une longueur de 10 mm, largeur 1 mm, épaisseur 26 µm
- Composition C : rubans 3, identiques à ceux de l'exemple 1.4
- Composition D : rubans 5, de longueur 20 mm, largeur 1 mm, épaisseur 26 µm
- Composition E : rubans 6 de longueur 20 mm, largeur d'environ 2 mm, épaisseur 29 µm.

Pour chacune des compositions, on réalise une gâchée d'un volume d'environ 7 litres suivant la séquence de malaxage de l'exemple 2.

### Fabrication de plaques

A partir de chacune des compositions A à E mentionnées plus haut, on réalise des plaques rectangulaires de dimensions 90 x 60 x 1 cm. Pour cela le matériau est mis en place dans des moules horizontaux ayant ces dimensions internes. Le serrage se fait sur table vibrante.

Le mode de fabrication est le suivant :

On réalise une gâchée à partir de l'une des compositions, d'un volume de 7 litres environ. La quantité nécessaire de mortier est ensuite déversée en une seule masse sur la région centrale du moule. On met en route la vibration et on étale le mortier à l'aide d'un outil présentant une grande surface plane, tel qu'une taloche; l'écoulement du mortier est favorisé en appliquant, à l'aide de la partie plane de l'outil, une pression verticale le moule étant fixé à plat sur la table vibrante.

On égalise ou lisse au besoin à la truelle. La finition peut également être assurée à l'aide d'un rouleau rigide, présentant des crénelures, la plaque étant maintenue sous vibration. Les plaques sont ensuite recouvertes d'un couvercle ou d'une membrane permettant de limiter l'évaporation. On démoule environ 1 jour après le coulage et on conserve les plaques sous une feuille plastique. On effectue s'il y a lieu un traitement thermique.

un constate lors de la fabrication de telles plaques que les rubans s'orientent préférentiellement de façon parallèle au fond du moule, c'est-à-dire aussi parallèle au feuillet moyen de la plaque. Cette observation sur matériau frais est confirmée par l'examen visuel ultérieur de coupes transversales du matériau durci.

Dans l'exemple traité, on conserve la plaque sous plastique jusqu'à l'âge de 72 h ; on découpe ensuite par sciage des éprouvettes prismatiques de dimensions en plan 350 mm/80 mm ; l'épaisseur des éprouvettes est celle de la plaque, soit ici environ 10 mm.

Les éprouvettes sont entreposées pendant 48 h dans une étuve sèche à 100°C.

### Essais mécaniques

Les éprouvettes de dimensions 350 x 80 x 10 mm sont testées en flexion 4 points, suivant le protocole décrit précédemment dans le chapitre "Matériels et Méthodes".

Les enregistrements numériques permettent après traitement de calculer des grandeurs caractéristiques du comportement en flexion.

Les grandeurs caractéristiques sont reportées dans le tableau VI suivant, comme moyennes calculées sur 4 essais.

**TABLEAU VI**

| Composition | A | B | C | D | E |
|---|---|---|---|---|---|
| Limite de proportionnalité (MPa) | 17,5 | 15,3 | 15,2 | 15,5 | 14,1 |
| Résistance en flexion (MPa) | 22 | 21,8 | 28,1 | 31,5 | 22,6 |
| Flèche au maximum de force (mm) | 2,3 | 3,1 | 6 | 6,9 | 3,9 |

On notera que la flèche reportée ici est le déplacement au tiers de la portée.

Un autre moyen de rendre compte du comportement est de calculer à partir des enregistrements numériques effectués pour un matériau, une courbe moyenne de comportement représentant l'évolution de la force moyenne sur 4 éprouvettes en fonction du déplacement. A la place de la force moyenne on préfère reporter un indicateur qui est la contrainte conventionnelle en flexion.

De telles courbes sont reportées pour les compositions testées, en figure 1.

Il ressort de ces courbes que les compositions C et D, associées à l'utilisation de rubans 3 et 5 présentent une résistance en flexion voisine de 30 MPa, nettement supérieure à la résistance en flexion des autres compositions. Le classement opéré d'après l'exemple 1 sur une autre géométrie d'éprouvette se trouve confirmé et complété, c'est-à-dire qu'il est plus avantageux d'utiliser des rubans longs et étroits.

De plus les 2 compositions C et D présentent également une flèche ou déformation au maximum de force nettement supérieure à celle obtenue avec les autres compositions ; ceci indique une ductilité accrue du matériau ; l'ensemble des matériaux cités présentent la capacité, dans l'essai de flexion, de reprendre une charge supérieure à la limite de proportionnalité, ceci sur une plage de déformation importante et maximale pour les compositions C et D.

## Revendications

1. Composition de béton renforcée par des fibres métalliques de structure amorphe comprenant en outre au moins du ciment, des éléments granulaires, des éléments ultrafins, de l'eau et un agent dispersant caractérisée en ce qu'elle comprend à titre de fibres métalliques, au moins 4 à 40 % en masse de rubans métalliques composés d'un alliage métallique à base de fer, de phosphore, de carbone, de silicium et de chrome.

2. Composition de béton selon la revendication 1 caractérisée en ce qu'il s'agit de rubans métalliques dont les longueurs sont comprises entre environ 1 et 45 mm, les largeurs entre environ 0,1 et 2 mm et les épaisseurs entre environ 15 et 30 µm.

3. Composition de béton selon la revendication 1 ou 2 caractérisée en ce que les rubans métalliques ont de préférence une longueur de 10 à 30 mm, une largeur de 1 à 1,6 mm et une épaisseur de 25 à 30 µm.

4. Composition de béton selon la revendication 1, 2 ou 3 caractérisée en ce que les rubans métalliques ont de préférence une longueur de l'ordre de 15 à 20 mm, une largeur d'environ 1 mm et une épaisseur d'environ 26 µm.

5. Composition de béton selon la revendication 1 ou 2 caractérisée en ce qu'il s'agit d'un mélange de rubans de longueur comprise entre environ 1 et 20 mm, de largeur comprise entre environ 0,1 et 0,5 mm et d'épaisseur comprise entre environ 15 et 30 µm.

6. Composition de béton selon la revendication 3 ou 4 caractérisée en ce qu'elle comprend jusqu'à 8,5 % en masse environ desdits rubans métalliques.

7. Composition de béton selon la revendication 5 caractérisée en ce qu'elle comprend environ 35 % en masse desdits rubans métalliques.

8. Composition de béton selon l'une des revendications 1 à 7 caractérisée en ce que les rubans métalliques possèdent une surface spécifique comprise entre 9 et 19 m²/kg et de préférence entre 9 et 11 m²/kg.

9. Composition de béton selon l'une des revendications précédentes caractérisée en ce que les rubans métalliques sont composés d'un mélange amorphe (Fe, Cr)₈₀ (P, C, Si)₂₀.

10. Composition de béton selon l'une des revendications précédentes caractérisée en ce qu'elle comprend un rapport massique eau/ciment compris entre environ 0,18 et 0,25.

11. Composition de béton selon l'une des revendications précédentes caractérisée en ce que l'agent dispersant est un polymère de la famille des polymélamines.

12. Composition de béton selon l'une des revendications précédentes caractérisée en ce que les éléments granulaires sont un sable siliceux de granulométrie inférieure à environ 3 mm et de préférence comprise entre 100 et 400 µm.

13. Composition de béton selon l'une des revendications précédentes caractérisée en ce que les éléments ultrafins sont des éléments à réactions pouzzolaniques tels que la silice amorphe de fumées de silice, les quartz ultrabroyés, les métakaolins, les cendres volantes ou encore des éléments à réactions hydrauliques tels que les laitiers hyperbroyés.

14. Composition de béton selon l'une des revendications 1 à 13 caractérisée en ce qu'elle comprend en % massique.
| | |
|---|---|
| éléments granulaires | complément à 100 % |
| éléments ultrafins | 5 à 15 % |
| ciment | 30 à 60 % |
| agent dispersant (extrait sec) | 0,5 à 3 % |
| rubans métalliques | 4 à 40 % |
| eau | 6 à 12 %. |

15. Composition de béton selon l'une des revendications 1 à 4 et 6 à 14 caractérisée en ce qu'elle comprend en % massique
| | |
|---|---|
| sable siliceux | 28,6 % |
| fumée de silice | 12,7 % |
| ciment Portland | 41,2 % |
| agent dispersant à base de polymélamine | 1,0 % |
| rubans métalliques (longueur de 5 à 15 mm, largeur de l'ordre de 1 mm et d'épaisseur comprise entre 15 et 26 µm) | 8,5 % |
| eau | 8,0 % |

16. Procédé de préparation d'une composition de béton selon l'une des revendications précédentes caractérisé en ce que :
- dans une première étape, on mélange dans un malaxeur les éléments granulaires, le ciment, les éléments ultrafins, tout ou partie de la quantité requise en agent dispersant et tout ou partie de l'eau, jusqu'à l'obtention d'un mélange homogène,
- dans une seconde étape éventuelle, on ajoute tout ou partie de la quantité restante en agent dispersant et en eau et on mélange l'ensemble de manière à obtenir un mélange homogène et de consistance pâteuse ou fluide,
- dans une troisième étape, on ajoute progressivement audit mélange, de préférence maintenu sous agitation, la charge métallique considérée et les quantités restantes éventuelles en agent dispersant et eau et l'on poursuit l'agitation, de préférence à forte vitesse, jusqu'à l'obtention d'un mélange homogène et l'on récupère la composition.

17. Procédé selon la revendication 16 caractérisé en ce que l'on ajoute de préférence les éléments granulaires, avant l'incorporation du ciment et après avoir effectué un prémélange des éléments ultrafins, de l'eau et éventuellement de tout ou partie de l'agent dispersant.

18. Elément en béton obtenu par durcissement d'une composition selon l'une des revendications 1 à 15.
